# EUROPEAN PATENT SPECIFICATION

(11) **EP 3 877 684 B1**
(45) Date of publication and mention of the grant of the patent: **09.11.2022**
(21) Application number: 19798350.5
(22) Date of filing: 30.10.2019
(51) Int. Cl.: F16L 11/10, F16L 11/12

(54) **HOSE ARRANGEMENTS**
SCHLAUCHANORDNUNGEN
AGENCEMENTS DE TUYAU SOUPLE

(30) Priority: 07.11.2018 GB 201818132
(43) Date of publication of application: 15.09.2021
(60) Divisional application: 22197328.2
(73) Proprietor: Exel Industries, 75009 Paris (FR)
(72) Inventor: LORD, David, Birmingham West Midlands B76 1AB (GB)
(74) Representative: CSY London
(86) International application number: PCT/GB2019/053065
(87) International publication number: WO 2020/095026

(56) References cited:
- JP-A- 2002 206 670
- US-A1- 2014 130 930
- US-A1- 2015 354 731
- US-A1- 2018 106 398

## Description

This invention relates to hose arrangements.

The ideas in this specification are generally applicable to hoses of different types including industrial hoses, for example, hoses used in spraying applications, as well as, watering hoses including domestic, say, garden hoses. One example of the hoses to which the ideas relate are garden water supplying hoses of the type which have an expanded increased length when pressurised due to water flowing therethrough and a contracted state in the absence of such pressure. Whilst the use of such hoses in the field of garden hoses is of particular interest the ideas can also be relevant where similar expanding hoses are used in other circumstances.

One such existing expandable hose is described in GB 2490276A. That hose has an outer tube formed of a non-elastic and flexible material and an inner tube constructed of an elastic material. The outer and inner tube have a first end attached together by a first coupler and a second end attached together by a second coupler. The hose has a shorter length in a non-water flow contracted state and a longer length in an expanded state where water pressure is applied to the interior of the elastic tube. The water flow path is through the inner elastic tube whereas the outer tube serves to control and contain expansion of the inner tube in the expanded state. In the contracted state the outer tube is in a crumpled or undulating state whereas in the expanded state the outer tube is relatively taut and restrains the inner tube against further expansion.

Whilst such hoses can function satisfactorily, there is a general desire to provide hoses with an even greater degree of possible expansion and/or better resistance to wear. In particular pre-existing hoses can have a tendency to fail after repeated use - that is, after repeated expansion and contraction cycles. The failure mode can vary but typically the failure is of the inner elastic tube where this ruptures at some point along its length or there is a failure of the connection between the inner elastic tube and one of the couplers.

US 2015/354731 A1 describes elastic retractable and extendible pressure hoses with an outer cover that can be braided, knitted, woven, and/or wrapped so that it can widen radially when it is longitudinally retracted and constrict radially when longitudinally lengthened.

It is an aim of at least some embodiments in the present specification to address at least some of these issues.

According to a first aspect of the present invention there is provided a hose arrangement according claim 1.

This can facilitate specific choices as to the properties of the outer tube and can for example allow increased elasticity in the longitudinal direction whilst retaining control over radial expansion.

The flexible material may be such that the outer tube has greater elasticity in a longitudinal direction than in a transverse direction.

The flexible material of the outer tube may have greater elasticity in a longitudinal direction than in a transverse direction.

Perhaps surprisingly with these types of arrangements it has been found that greater product lifetime can achieved - that is that a greater number of expansion and contraction cycles may be survived by a product. It is thought that this may be because wear can tend to be reduced as there is a proportional reduction in the amount of the expansion that is due to the unfolding of undulations and/or there is a benefit of having a more gradual progress to maximum expansion - ie there is greater "give" in the arrangement as maximum expansion is reached and/or there is benefit in the longitudinal elasticity aiding the initial stages of contraction.

The first type of yarn may be softer than the second type of yarn. This can lead to a less abrasive fabric, than existing fabrics used in such hoses. This can further aid in wear resistance.

We use greater elasticity to mean that if a body is subjected to a predetermined stress the strain exhibited (increase in length per unit length) is greater.

Thus particularly here, greater elasticity in the tube means that if the tube is subjected to a predetermined non-destructive stress in the longitudinal direction the strain exhibited (increase in length per unit length) is greater than if the same stress is applied in the transverse direction. In practical terms it is the elasticity at the type of stresses that will be experienced in a functioning hose in the expanded state which is of relevance.

In weaving the fabric, the first type of yarn may be arranged as the warp and the second type of yarn as the weft.

The first material may have an intrinsic elasticity that is greater than the intrinsic elasticity of the second material. By this it is meant that if one considers two yarns, one of each material, which are each a single strand of the same thickness and length, the yarn of the first material will exhibit more strain under a predetermined non-destructive stress than the yarn of the second material under the same stress. Thus the first yarn may be of a material that is more elastic than the material of the second yarn.

The first type of yarn may be a polyamide yarn, in particular a Nylon yarn. Nylon 66 is particularly preferred.

The second type of yarn may be a polyester yarn.

The first type of yarn is preferably a multi-stranded yarn. It has been found that use of a multi-stranded yarn gives enhanced reliability. Where a single strand yarn was used for the first type of yarn and this had sufficient thickness this was found to have an increased risk of failure during weaving - ie an increased tendency to snap.

The first type of yarn preferably comprises at least 4 strands, more preferably exactly 4 strands.

The 4 strands may comprise two twisted pairs. The pairs may be themselves twisted with one another or run alongside one another.

The second type of yarn may be a single stranded yarn.

The second type of yarn preferably has a greater thickness (higher denier) than that of the first type of yarn. The second type of yarn may have thickness which is twice that of the first type of yarn. In one example the first type of yarn may have a thickness of 400 denier - which preferably comprises 4 strands of 100 denier each - and the second type of yarn may have a thickness of 800 denier.

The flexible material of the outer tube is ironed after weaving to minimise the risk of herniation - that is a hole opening up in the weave through which the inner elastic tube may project under pressure. It has been found that ironing at a carefully controlled range of temperatures is particularly important where a fabric comprising two types of yarn is used.

The hose arrangement may comprise a first hose end portion for receiving a first end of the outer tube and a first end of the elastic inner tube for use in coupling the first ends of the tubes together and may comprise a second hose end portion for receiving a second end of the outer tube and a second end of the elastic inner tube for use in coupling the second ends of the tubes together.

The outer tube and the inner tube may be connected together at a first hose end portion and/or at a second hose end portion. The first and/or second hose end portion may comprise a constriction for constricting water flow through the hose arrangement.

The outer tube and the inner tube may be connected together at a joiner at at least one location inwards of the first and second hose end portion.

The outer tube may be welded, say, sonic welded or heat welded to at least one of the first hose end portion, the second hose end portion, and the joiner.

According to another aspect of the present invention there is provided a method of manufacturing a hose arrangement according to claim 10.

The method may comprise the step of monitoring, during the ironing process, the temperature of at least one of the fabric and an ironing tool used to conduct the ironing and controlling the ironing tool so as to maintain the monitored temperature between predetermined thresholds.

The method may comprise the step of sonic or heat welding the outer tube to at least one of the first hose end portion, the second hose end portion, and the joiner. The method may comprise the step of selecting parameters for the sonic or heat welding which take into account the properties of the two types of yarn where the outer tube is woven from two types of yarn. At least one of a frequency and a duration used for the sonic welding may be selected to be at a value which is intermediate between the optimal value for a fabric of the first type of yarn and the optimal value for a fabric of the second type of yarn.

The step of selecting parameters may comprise the steps of attempting sonic or heat welding using a first trial set of parameters for a predetermined type of woven fabric, testing the resulting weld, adapting the trial set of parameters based on the results of the test to produce a second trial set of parameters, attempting welding using the second trial set of parameters, testing the resulting weld and repeating these steps until a satisfactory weld is achieved, at which stage the respective trial set of parameters may be selected for use in the main manufacturing method with that predetermined type of woven fabric.

Note that in general each of the optional features following each of the aspects of the invention above is equally applicable as an optional feature in respect of each of the other aspects of the invention and could be re-written after each aspect with any necessary changes in wording. Not all such optional features are re-written after each aspect merely in the interests of brevity.

Embodiments of the present invention will now be described, by way of example only, with reference to the accompanying drawings, in which:
Figure 1 schematically shows a garden water supplying hose arrangement in a contracted state;
Figure 2 schematically shows part of the hose arrangement of Figure 1 in an extended state;
Figure 3 is a sectional view of the part of the hose arrangement shown in Figure 2;
Figure 4 is a schematic detail view of part of a hose assembly of the hose arrangement shown in Figures 1 to 3; and
Figure 5 schematically shows yarn making up longitudinally running warp in a woven outer tube of the hose assembly shown in Figure 4.

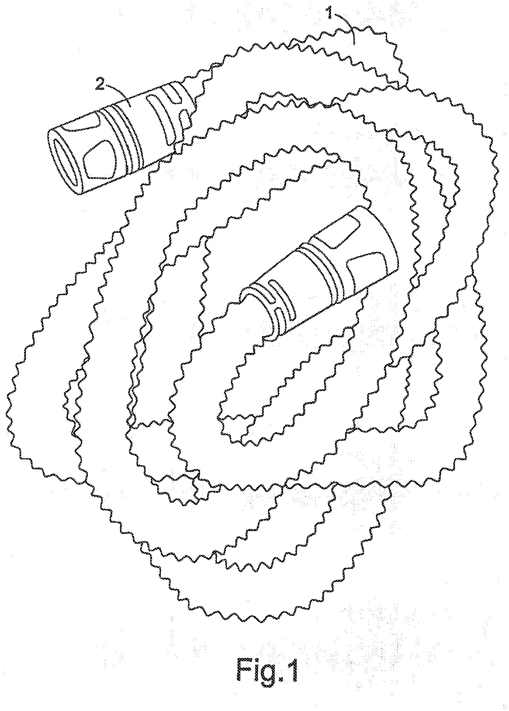

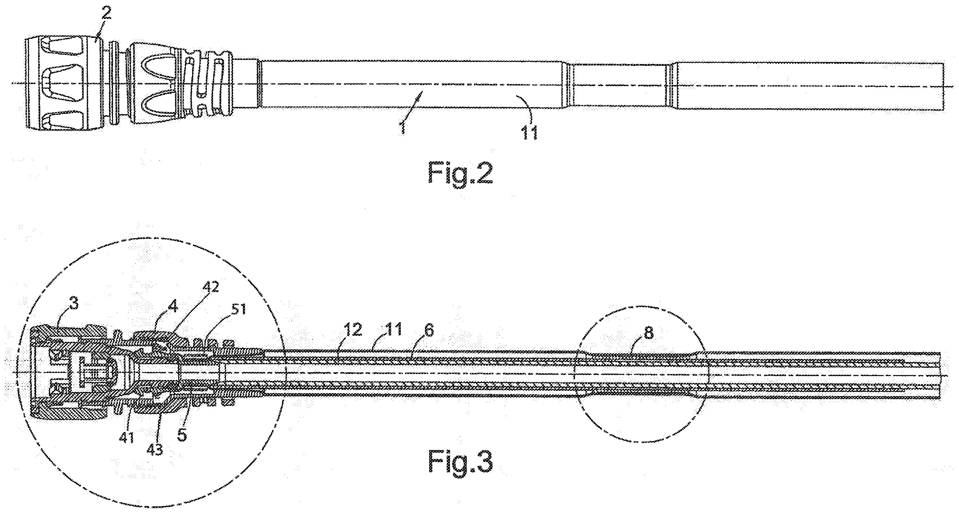

Figures 1 to 3 schematically show a hose arrangement comprising a hose assembly 1 provided at each end with a respective hose end component 2 (only one of which can be seen in Figures 2 and 3). The hose arrangement is a garden watering hose arrangement for use in, for example, domestic gardens when watering plants and/or washing surfaces. Figure 1 shows the hose arrangement in a contracted state which will tend to be adopted when there is no water in the hose assembly. On the other hand Figure 2 and 3 show part of the hose arrangement of Figure 1 in an extended state which will tend to be adopted when water flows through the hose assembly.

Whilst the present description is directed to this type of garden watering hose it is noted again that the ideas in the present specification are more generally applicable than this. They may be used, for example, in other types of water hoses in non-domestic situations and moreover in other applications, for example, industrial applications including spraying.

In the present embodiment each hose end component 2 is in the form of a hose fitting which is arranged to allow the hose arrangement to be connected to other components. In particular, for example, one of the hose fittings may be connected to a tap or another source of water and the other hose fitting may be connected to a spray gun, a nozzle or other outlet device. In the present embodiment each hose fitting is an industry standard female push fit hose fitting which is arranged to allow connection to a complimentary male fitting provided on another component. Of course other types of hose fitting might be provided particularly for use in countries where a different type of hose fitting is the norm.

The hose fitting 2 comprises a fitting portion 3 and a connector portion 4. The fitting portion 3 is arranged for connection to the complementary male fitting portion provided on another component. Since this part of the fitting 2 is a standard piece of garden watering equipment and is not of particular importance to the present invention further description of this is omitted. The connector portion 4 is for connecting to the end of the hose assembly 1. Again this has a standard construction including a spigot 41 onto which the hose assembly 1 is mounted and clamping fingers 42 clamped onto the hose assembly 1 by a clamping nut 43.

As alluded to above, different forms of hose end component 2 may be used in the hose arrangement. Thus for example, the type of hose fitting 2 shown in Figure 2 and 3 is of a slightly different type of that shown in Figure 1. Furthermore the hose end component 2 might be a nozzle, spray gun, watering lance, or some other component. Provided that this hose end component 2 has a connecter portion 4 for connecting to a hose it may be connected to the hose assembly. To put this another way the hose assembly 1 of the present embodiment is suitable for use with many different hose end components.

The hose assembly 1 comprises a first outer tube of a woven material 11 and a second inner elastic tube 12 which is for carrying water through the hose assembly 1 and hence the whole hose arrangement. The outer tube 11 and inner tube 12 are mounted on an adaptor 5 which in turn is captured in the connector portion 4 of the hose end component 2 so that the outer tube 11 and inner tube 12 are mounted to the hose end component 2. A similar or identical arrangement can be provided at the opposite end of the hose assembly 1.

As well as the inner and outer tubes 12, 11 the hose assembly 1 comprises two elastomeric sleeve portions 6 (only one of which can be seen in the drawings). The first of these sleeve portions 6 is provided at a first end of the hose arrangement as shown in Figure 3 whereas the other elastomeric sleeve portion 6 is provided at the opposite end of the hose arrangement.

Each sleeve portion 6 is provided in the hose assembly between the inner tube 12 and the outer tube 11. As will be appreciated the sleeve 6 is another tube portion. In the present embodiment the outer tube 11, sleeve 6, and inner tube 12 are all mounted on the adaptor 5 by a metal ferrule 51.

The sleeve portion 6 runs between the adaptor 5 and a respective joiner member 8 which is provided at an inwards location on the hose assembly 1. A respective joiner member 8 is provided towards each end of the hose assembly 1 although again only one of these can be seen in the drawings. The outer tube 11, inner tube 12, and sleeve 6 are all joined to one another at the joiner member 8. In the present embodiment the outer tube 11 is heat welded or sonic welded onto an outer curved surface of the joiner member 8 whilst the elastomeric sleeve and inner tube 12 are bonded (using adhesive) to the joiner member 8.

In the present embodiment the elastomeric sleeve 6 extends beyond the joiner member 8 so as to extend further longitudinally inwards into the outer tube 11 than the location at which the joiner member 8 is located. Thus, in the present embodiment, a break or aperture is provided in the elastomeric sleeve 6 in the region of the joiner member 8 to facilitate bonding between the inner tube 12 and the joiner member 8.

In pre-existing examples of expanding hoses of this general type, the outer tube has been formed of flexible but inelastic material. This is useful for containing the radial expansion of the inner tube when this is filled with water causing the hose arrangement to adapt its expanded state. However when an inelastic outer tube is used this also serves to constrain longitudinal expansion of the hose arrangement. That is to say when this outer tube is inelastic, once the undulations have been stretched out of the outer tube by the expansion of the hose arrangement the fabric of the outer tube stops further expansion.

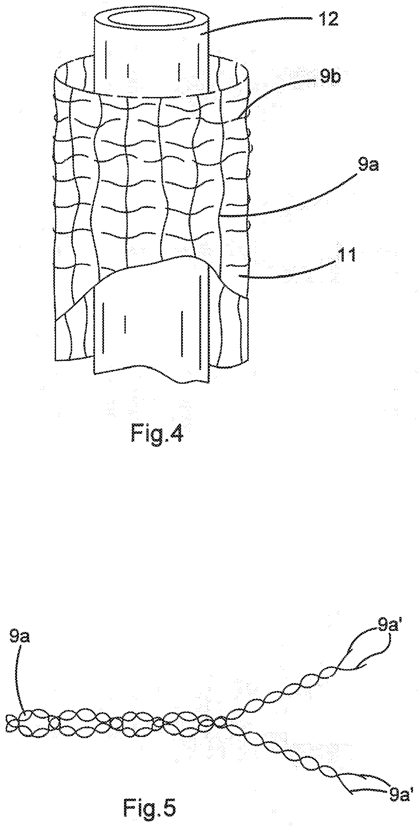

In looking to improve performance of such hose arrangements in terms of their expansion and longevity the present inventors have realised that advantages can be achieved if a different form of outer tube 11 is used. Thus in the present embodiment the outer tube 11 is formed of woven fabric but this is formed of two types of yarn. A first type of yarn is used for longitudinally arranged warp yarns 9a and a second type of yarn is used for transversally arranged (and in the tube 11 - circumferentially arranged) weft yarns 9b as illustrated in Figure 4. In the present example the longitudinally arranged warp yarns 9a are of a polyamide material in particular Nylon and in a specific example Nylon 66. On the other hand the transversely arranged weft yarns 9b are of a polyester material.

The longitudinally arranged yarns 9a are both softer and more elastic than the transversally arranged weft yarns 9b.

This yields an outer tube 11 which is more elastic in the longitudinal direction than the transverse direction and also more elastic than conventional outer tubes of this kind which are typically woven from inelastic yarns such as polyester yarns both for the longitudinal yarns and the transverse yarns.

In the present embodiment this longitudinally elastic tube 11 is still significantly less elastic than the inner elastic tube 12 but can allow a significant additional expansion of the overall hose arrangement beyond the state where all of the undulations have been stretched out of the outer tube 11.

In a particular example, a hose arrangement with a contracted length of 6.7 metres might extend to a length of 15 to 16 metres with an internal pressure at 5 bar to 10 bar where the outer tube 11 is a conventional outer tube of the more inelastic type. However when this outer tube is replaced with a two type yarn elastic outer tube 11 of the present type, a 6.7 metre hose may extend to, say, 17 to 18 metres in length at 5 bar to 10 bar internal pressure. Thus an additional two metres of useable hose length may be achieved. Note that this is a significant additional amount of extension (or strain) representing perhaps a 20% increase in the expansion obtained. Preferably at least a 10% increase in expansion is provided, more preferably at least a 15% increase.

At the same time the two yarn structure ensures adequate control over radial expansion.

Furthermore, as mentioned in the introduction it has been determined that hose arrangements with this type of construction have a significantly longer working life than those with inelastic outer tubes - withstanding a significantly larger number of expansion and retraction cycles.

In a specific example, the longitudinal yarns 9a may be of Nylon 66 with an overall thickness of 400 denier. It is preferable if, as illustrated, in Figure 5 the longitudinal yarn 9a is a multi-stranded yarn made up of, for example, four strands which are caused to run together as one yarn. This may be achieved by twisting two of the strands into a respective pair and another two of the yarns into another respective pair and then twisting these pairs together two form the overall yarn 9a. In an alternative two twisted pairs of yarn may be run side by side to act as one longitudinal warp yarn 9a with similar results.

It has been found that using a multi-stranded yarn is significantly more effective than using a single strand yarn for the longitudinal yarns 9a. If a single strand yarn of sufficient thickness is used in the present type of outer tube 11 a significantly higher number of failures occur during weaving as this yarn tends to snap. The use of multi-stranded yarns overcomes this issue. Thus in this particular embodiment 4 strands, each of 100 denier are twisted together to form one longitudinal yarn 9a. In this specific example each transverse weft yarn 9b has a thickness of 800 denier and is of polyester.

Note that whilst the provision of a multi-material outer tube 11 has been found to give benefit in terms of greater overall expansion and better hose lifetime, providing such a two material outer tube 11 is not without difficulties.

First of all, as mentioned above, in order to improve reliability the use of a multi-stranded longitudinal yarn 9a is preferred.

Furthermore, such multi-material outer tube 11 has been found to be more susceptible to herniation in practical expanding hoses. That is, such multi-material tube is susceptible to small holes appearing between adjacent strands in the weave through which the expanded inner tube 12 may tend to project when under pressure.

It has been determined that subjecting the woven outer tube 11 to an ironing process after weaving can significantly reduce the incidence of such herniation. Furthermore, in order to maximise this reduction in herniation risk, this ironing process is best carried out with careful temperature control over the ironing process.

Thus in a preferred method of manufacture, the temperature of the woven material tube 11, or of an ironing tool used in the ironing process, is monitored during ironing and this monitored temperature is controlled by controlling the ironing tool so as to keep the temperature within pre-determined thresholds. With the specific combination of yarns mentioned above suitable temperature ranges for ironing have been found to be in the order of 80°C. More generally with the present two material tubes the ironing temperature might be selected in the range 70°C - 90°C and controlled within +/- 5°C or +/- 2°C of the selected temperature during operation.

Furthermore the use of such a two material outer tube 11 can increase the difficulty of achieving effective welding of the outer tube 11 on the joiner member 8. In practice it is necessary to find a set of parameters which will successfully weld the fabric 11 to the joiner member 8 (which is of a plastics material) taking into account the properties of the different materials present in the outer hose 11. In practice this means empirically determining a set of parameters which will achieve effective welding by selecting trial values of parameters and then testing the effectiveness of the resulting weld. As an example with the particular combination of yarns described above sonic welding at a frequency of 20 kHz, with weld energy of 375J, a weld time of 0.17 seconds, and a hold time of 0.5 seconds has been found to be effective. Preferably the welding process is operated with a tolerance of +/- 5%, more preferably +/- 1 %, in these parameter values, so for example preferably the frequency is 20 kHz +/- 5%, or 20 kHz +/- 1% and so on.

## Claims

1. A hose arrangement comprising an outer tube (11) of flexible material and an inner tube (12) of an elastic material for carrying fluid through the hose arrangement, wherein due to the action of the elastic inner tube (12), the hose arrangement has a shorter length in a contracted state in the absence of fluid pressure in the interior of the inner elastic tube and a longer length in an expanded state when fluid pressure is applied to the interior of the elastic inner tube, and the outer tube (11) has an undulating state when the hose arrangement is in the contracted state and serves to control and contain expansion of the inner tube when the hose arrangement is in the expanded state, wherein the flexible material of the outer tube comprises a woven fabric which is woven from two types of yarn, a first type of yarn being of a first material and a second type of yarn being of a second material, which is different from the first material, wherein the first type of yarn (9a) is arranged longitudinally in the tube and the second type of yarn (9b) is arranged transversally in the tube, the first type of yarn has a first elasticity and the second type of yarn has a second elasticity which is lower than the first elasticity, and the outer tube is of an ironed woven fabric.

2. A hose arrangement according to claim 1 in which the flexible material is such that the outer tube (11) has greater elasticity in a longitudinal direction than in a transverse direction.

3. A hose arrangement according to any preceding claim in which the first type of yarn (9a) is softer than the second type of yarn (9b).

4. A hose arrangement according to any preceding claim in which the first yarn (9a) is of a material that is more elastic than the material of the second type of yarn (9b).

5. A hose arrangement according to any preceding claim in which the first type of yarn (9a) is a polyamide yarn, in particular a Nylon yarn.

6. A hose arrangement according to claim 1 in which the first type of yarn (9a) is of Nylon 66.

7. A hose arrangement according to any preceding claim in which the second type of yarn (9b) is a polyester yarn.

8. A hose arrangement according to any preceding claim in which the first type of yarn (9a) is a multi-stranded yarn.

9. A hose arrangement according to claim 8 in which the first type of yarn (9a) comprises two twisted pairs of strands.

10. A method of manufacturing a hose arrangement according to any preceding claim, the method comprising the steps of:
weaving two types of yarn (9a, 9b) together to yield the outer tube (11) as a woven fabric outer tube;
ironing the woven fabric outer tube to align the woven yarn; and
mounting the inner elastic tube (12) within the woven fabric outer tube to form the hose arrangement.

11. A method according to claim 10 comprising the further step of monitoring, during the ironing process, the temperature of at least one of the fabric and an ironing tool used to conduct the ironing and controlling the ironing tool so as to maintain the monitored temperature between predetermined thresholds.

12. A method according to claim 10 or 11 comprising the further step of sonic or heat welding the outer tube to at least one of a first hose end portion, a second hose end portion, and a joiner member and selecting parameters for the sonic or heat welding which take into account the properties of the two types of yarn.

## Patentansprüche

1. Schlauchanordnung, umfassend eine äußere Röhre (11) aus flexiblem Material und eine innere Röhre (12) aus einem elastischen Material zum Leiten von Fluid durch die Schlauchanordnung, wobei aufgrund der Wirkung der elastischen inneren Röhre (12) die Schlauchanordnung in einem zusammengezogenen Zustand in Abwesenheit von Fluiddruck im Inneren der inneren elastischen Röhre eine kürzere Länge, und in einem ausgedehnten Zustand, wenn Fluiddruck auf das Innere der elastischen inneren Röhre aufgebracht wird, eine längere Länge aufweist, und die äußere Röhre (11) einen gewellten Zustand aufweist, wenn sich die Schlauchanordnung in dem zusammengezogenen Zustand befindet, und dazu dient, die Ausdehnung der inneren Röhre einzuschränken und zu begrenzen, wenn sich die Schlauchanordnung in dem ausgedehnten Zustand befindet, wobei das flexible Material der äußeren Röhre einen gewebten Textilstoff umfasst, der aus zwei Arten von Garn gewoben ist, wobei eine erste Art von Garn aus einem ersten Material ist und eine zweite Art von Garn aus einem zweiten Material ist, das von dem ersten Material verschieden ist, wobei die erste Art von Garn (9a) in Längsrichtung in der Röhre angeordnet ist und die zweite Art von Garn (9b) in Querrichtung in der Röhre angeordnet ist, wobei die erste Art von Garn eine erste Elastizität aufweist und die zweite Art von Garn eine zweite Elastizität, die geringer als die erste Elastizität ist, aufweist und die äußere Röhre aus einem geglätteten gewobenen Textilstoff ist.

2. Schlauchanordnung nach Anspruch 1, wobei das flexible Material derart ist, dass die äußere Röhre (11) eine höhere Elastizität in einer Längsrichtung als in einer Querrichtung aufweist.

3. Schlauchanordnung nach einem der vorangehenden Ansprüche, wobei die erste Art von Garn (9a) weicher als die zweite Art von Garn (9b) ist.

4. Schlauchanordnung nach einem der vorangehenden Ansprüche, wobei das erste Garn (9a) aus einem Material ist, das elastischer als das Material der zweiten Art von Garn (9b) ist.

5. Schlauchanordnung nach einem der vorangehenden Ansprüche, wobei die erste Art von Garn (9a) ein Polyamidgarn, insbesondere ein Nylongarn ist.

6. Schlauchanordnung nach Anspruch 1, wobei die erste Art von Garn (9a) aus Nylon 66 ist.

7. Schlauchanordnung nach einem der vorangehenden Ansprüche, wobei die zweite Art von Garn (9b) ein Polyestergarn ist.

8. Schlauchanordnung nach einem der vorangehenden Ansprüche, wobei die erste Art von Garn (9b) ein mehrsträngiges Garn ist.

9. Schlauchanordnung nach Anspruch 8, wobei die erste Art von Garn (9a) zwei verdrillte Paare von Strängen umfasst.

10. Verfahren zum Herstellen einer Schlauchanordnung nach einem der vorangehenden Ansprüche, wobei das Verfahren die folgenden Schritte umfasst:
Verweben von zwei Arten von Garn (9a, 9b), um die äußere Röhre (11) als äußere Röhre aus gewebtem Textilstoff zu ergeben;
Glätten der äußeren Röhre aus gewebtem Textilstoff, um das gewebte Garn zu orientieren; und
Einsetzen der inneren elastischen Röhre (12) in die äußere Röhre aus gewebtem Textilstoff, um die Schlauchanordnung zu bilden.

11. Verfahren nach Anspruch 10, umfassend den weiteren Schritt des Überwachens, während des Glättungsprozesses, der Temperatur des Textilstoffs und/oder eines zum Durchführen des Glättens verwendeten Glättwerkzeugs und des Steuerns des Glättwerkzeugs, um die überwachte Temperatur zwischen vorgegebenen Grenzen zu halten.

12. Verfahren nach Anspruch 10 oder 11, umfassend den weiteren Schritt des Schall- oder Wärmeschweißens der äußeren Röhre an mindestens eines von einem ersten Schlauchendabschnitt, einem zweiten Schlauchendabschnitt und einem Verbindungselement und Wählen von Parametern für das Schall- oder Wärmeschweißen, die die Eigenschaften der zwei Arten von Garn berücksichtigen.

## Revendications

1. Agencement de tuyau comportant un tube extérieur (11) réalisé à partir d'un matériau souple et un tube intérieur (12) réalisé à partir d'un matériau élastique servant à transporter un fluide au travers de l'agencement de tuyau, dans lequel, en raison de l'action du tube intérieur élastique (12), l'agencement de tuyau a une longueur plus courte dans un état contracté en l'absence de pression du fluide à l'intérieur du tube élastique intérieur et une longueur plus longue dans un état étendu quand la pression du fluide est appliquée à l'intérieur du tube intérieur élastique, et le tube extérieur (11) présente un état ondulé quand l'agencement de tuyau est dans l'état contracté et sert à contrôler et contenir l'extension du tube intérieur quand l'agencement de tuyau est dans l'état étendu, dans lequel le matériau souple du tube extérieur comporte un tissu tissé qui est tissé à partir de deux types de fil, un premier type de fil étant réalisé à partir d'un premier matériau et un deuxième type de fil étant réalisé à partir d'un deuxième matériau, qui est différent du premier matériau, dans lequel le premier type de fil (9a) est agencé dans le sens longitudinal dans le tube et le deuxième type de fil (9b) est agencé dans le sens transversal dans le tube, le premier type de fil a une première élasticité et le deuxième type de fil a une deuxième élasticité qui est inférieure à la première élasticité, et le tube extérieur est réalisé à partir d'un tissu tissé repassé.

2. Agencement de tuyau selon la revendication 1, dans lequel le matériau souple est tel que le tube extérieur (11) a une plus grande élasticité dans une direction longitudinale que dans une direction transversale.

3. Agencement de tuyau selon l'une quelconque des revendications précédentes, dans lequel le premier type de fil (9a) est plus doux que le deuxième type de fil (9b).

4. Agencement de tuyau selon l'une quelconque des revendications précédentes, dans lequel le premier fil (9a) est réalisé à partir d'un matériau qui est plus élastique que le matériau du deuxième type de fil (9b).

5. Agencement de tuyau selon l'une quelconque des revendications précédentes, dans lequel le premier type de fil (9a) est un fil de polyamide, en particulier un fil de Nylon.

6. Agencement de tuyau selon la revendication 1, dans lequel le premier type de fil (9a) est réalisé à partir de Nylon 66.

7. Agencement de tuyau selon l'une quelconque des revendications précédentes, dans lequel le deuxième type de fil (9b) est un fil de polyester.

8. Agencement de tuyau selon l'une quelconque des revendications précédentes, dans lequel le premier type de fil (9a) est un fil à plusieurs brins.

9. Agencement de tuyau selon la revendication 8, dans lequel le premier type de fil (9a) comporte deux paires de brins torsadées.

10. Procédé de fabrication d'un agencement de tuyau selon l'une quelconque des revendications précédentes, le procédé comportant les étapes consistant à :
tisser deux types de fil (9a, 9b) ensemble pour produire le tube extérieur (11) sous la forme d'un tube extérieur en tissu tissé ;
repasser le tube extérieur en tissu tissé pour aligner le fil tissé ; et
monter le tube élastique intérieur (12) à l'intérieur du tube extérieur en tissu tissé pour former l'agencement de tuyau.

11. Procédé selon la revendication 10, comportant l'étape supplémentaire consistant à surveiller, au cours du processus de repassage, la température d'au moins l'un parmi le tissu et un outil à repasser utilisé pour effectuer le repassage et à contrôler l'outil à repasser de manière maintenir la température surveillée entre des seuils prédéterminés.

12. Procédé selon la revendication 10 ou la revendication 11, comportant l'étape supplémentaire consistant à effectuer un soudage par ultrasons ou un thermo-soudage du tube extérieur sur au moins l'un parmi une première partie d'extrémité de tuyau, une deuxième partie d'extrémité de tuyau et un élément de raccordement et à sélectionner des paramètres pour le soudage par ultrasons ou le thermo-soudage qui tiennent compte des propriétés des deux types de fil.
